# DEMANDE DE BREVET EUROPEEN

(11) **EP 0 717 933 A1**
(43) Date de publication de la demande: **26.06.1996**
(21) Numéro de dépôt: 95440059.4
(22) Date de dépôt: 14.09.1995
(51) Int. Cl.: A23G 7/00, A21C 9/08, A23G 3/30

(54) **Installation de chargement automatique des feuilles de pâte à mâcher avant maturation pour une ligne de production de pâte à mâcher**

(30) Priorité: 15.09.1994 FR 9411149
(71) Demandeur: Société TOGUM, F-67116 Reichstett (FR)
(72) Inventeur: Towae, Gérard, F-67000 Strasbourg (FR)
(74) Mandataire: Metz, Paul

(57) **Abrégé**

L'installation de chargement automatique se compose d'une bande transporteuse d'amenée (8) projetant à plat les feuilles (7) de pâte à mâcher individualisées sur les plateaux (2) de maturation présents sur un descenseur (18) en provenance d'un magasin à plateaux (2) par un transbordeur-basculeur (3) approvisionné par le magasin, dans lequel les plateaux (2) se présentent inclinés et individualisés. La position centrale de ce descenseur (18) correspond à la position de chargement et les plateaux (2) sont évacués après basculement à l'horizontale par un transporteur d'évacuation vers une pile de stockage tampon.

Cette invention intéresse les fabricants de machines pour la production de pâte à mâcher.

## Description

La présente invention se rapporte à une installation de chargement-évacuation automatique à haute cadence des plateaux de maturation d'une ligne de production de pâte à mâcher.

La pâte à mâcher connue sous la dénomination générique de chewing gum est produite par une ligne comprenant des malaxeurs, un corps de presse, une tête d'extrusion suivis d'un refroidisseur et d'un laminoir à la sortie duquel les nappes de pâte sont découpées en plaquettes ou feuilles qui seront empilées sur des plateaux de maturation. Les phases de stabilisation et de maturation qui suivent se déroulent sur une période plus ou moins longue, selon le résultat à obtenir, au cours de laquelle les plateaux restent empilés les uns sur les autres.

Les installations actuelles procèdent par circulation de plateaux sur un carrousel et évacuation par sortie-éjection. Or, à partir d'une certaine vitesse, les plateaux circulent trop vite sur le carrousel et celui-ci devient dangereux aussi bien pour les produits que pour la sécurité du fonctionnement. Ainsi, la cadence en plateaux limite la production à 100 feuilles à la minute pour les équipements en service. Cette cadence est jugée trop faible pour les impératifs actuels de production en grands volumes.

De plus, sur les carrousels existants, il est nécessaire de changer les pignons de la distribution pour modifier le nombre de feuilles chargées par plateau et celui-ci ne peut jamais devenir un multiple du nombre de chariots du carrousel en raison du chargement progressif à chaque tour en un endroit et le déchargement en un autre.

Ce manque de souplesse d'exploitation limite les performances de la ligne de production.

La présente invention a pour but d'automatiser les opérations sur le produit après sa sortie du laminoir jusqu'à l'empilement des plateaux de maturation. Ces opérations comprennent le chargement sur les plateaux, l'empilement des plateaux chargés et l'évacuation de ceux-ci.

A cet effet, l'invention se rapporte à une installation de chargement-évacuation automatique à haute cadence des plateaux de maturation d'une ligne de production de pâte à mâcher caractérisée en ce qu'elle se compose d'une rampe transporteuse d'amenée projetant à plat les feuilles ou plaques de pâte à mâcher individualisées sur les plateaux de maturation présents dans un descenseur en provenance d'un magasin à plateaux par un transbordeur-basculeur approvisionné par le magasin, descenseur dans lequel les plateaux se présentent inclinés et individualisés en position d'attente, de chargement, et d'évacuation, les plateaux étant évacués en position basse du descenseur par un transporteur composite d'évacuation jusqu'à un stock tampon.

Un des principaux avantages de l'invention réside dans le maintien du débit continu de feuilles amenées alors que le chargement s'effectue dans les plateaux les uns après les autres.

Un autre avantage concerne la programmation possible du nombre de feuilles chargées dans chaque plateau avec, comme limite, l'espace de réception disponible sur chaque plateau. Cette possibilité d'adaptation à la cadence de production apporte toute la souplesse d'exploitation souhaitée.

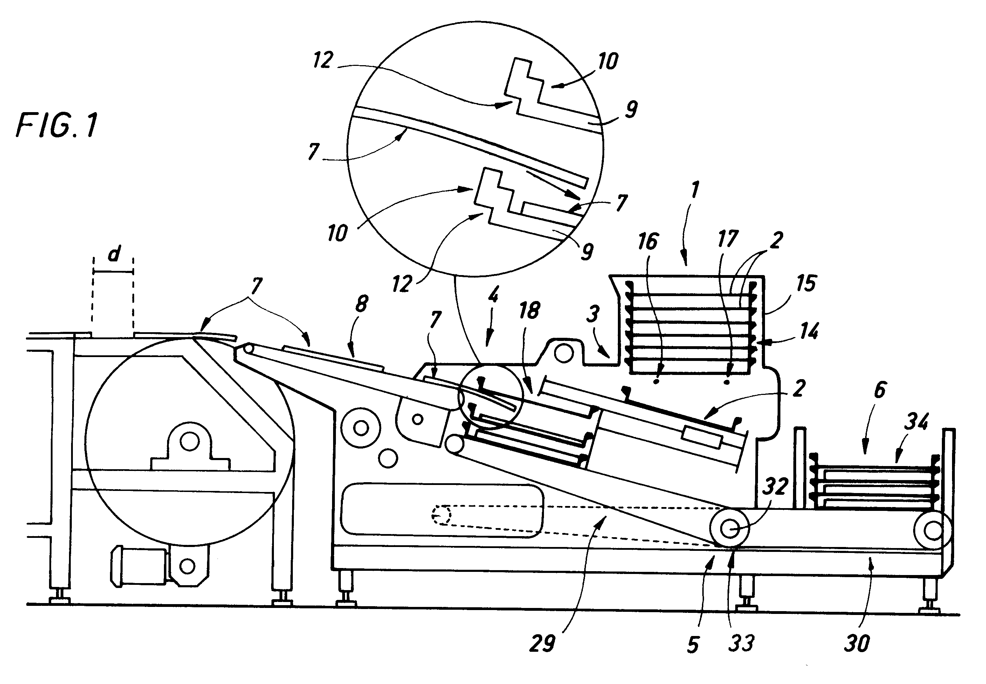

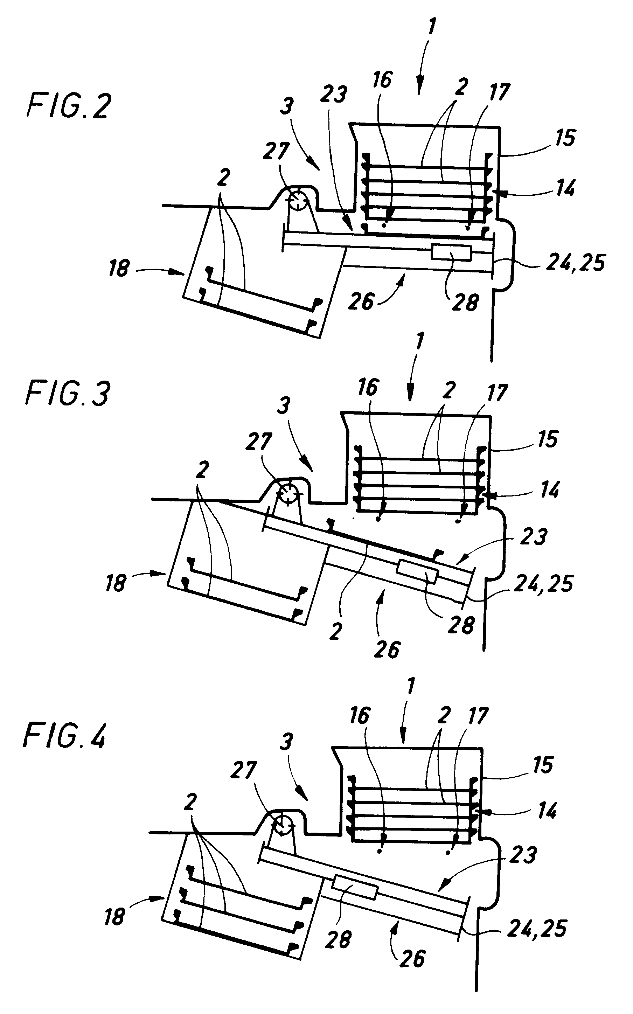

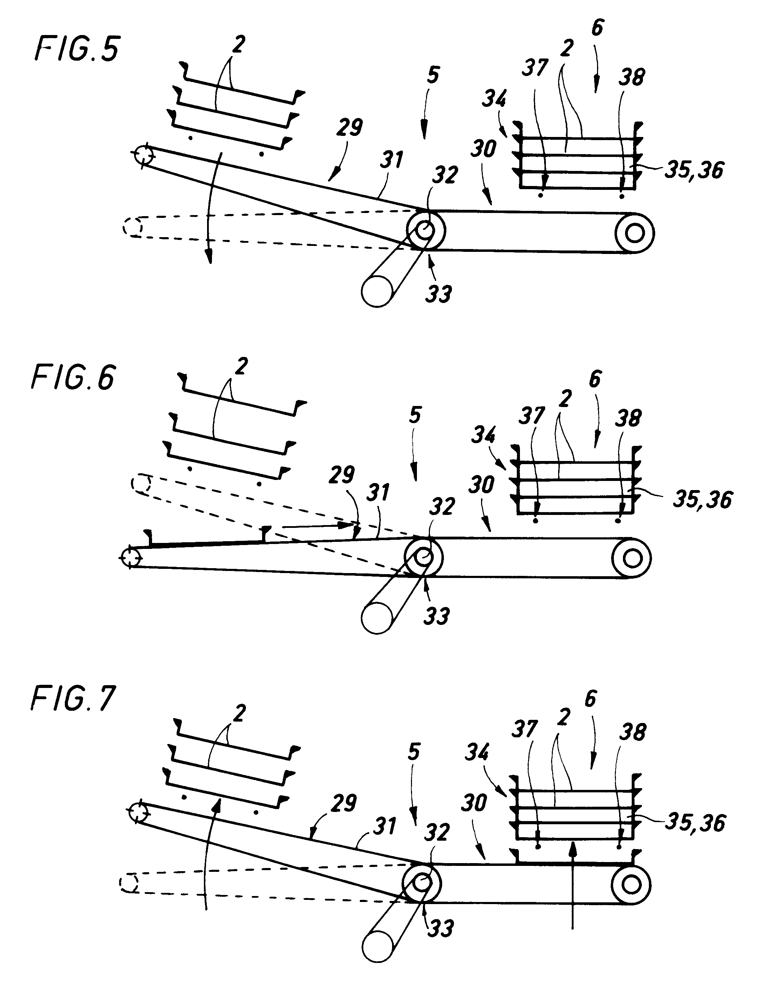

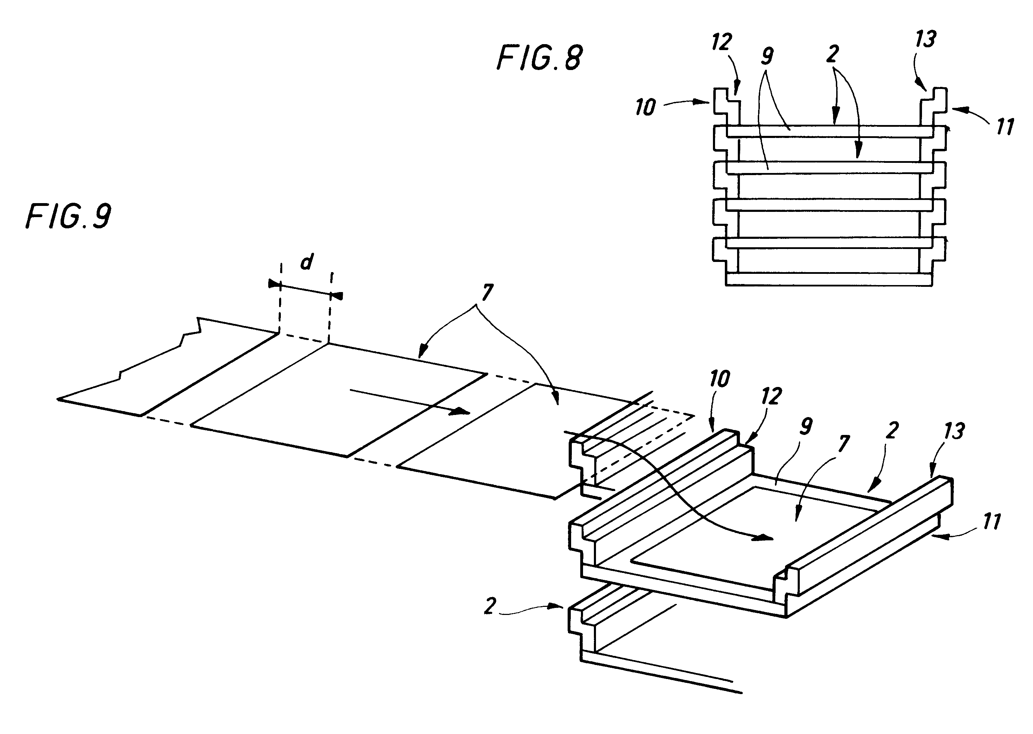

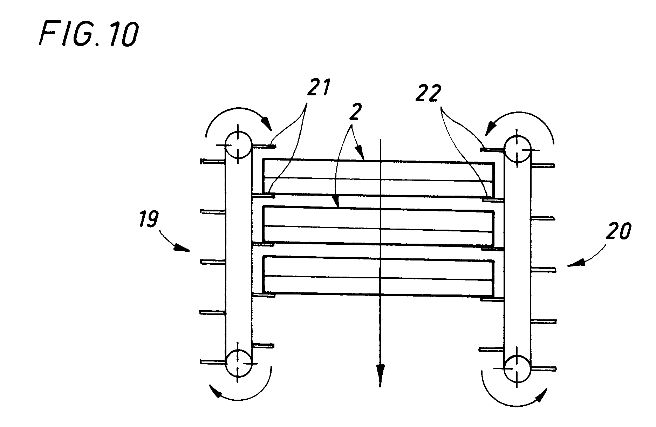

D'autres caractéristiques et avantages de l'invention apparaîtront dans la description qui suit, donnée à titre d'exemple et accompagnée des dessins qui représentent :
. la figure 1 : une vue d'ensemble de l'installation en position de chargement en feuilles de pâte à mâcher ;
. les figures de 2 à 4 : des vues schématiques en coupe illustrant le chargement des plateaux ;
. les figures de 5 à 7 : des vues schématiques en coupe illustrant l'évacuation des plateaux ;
. la figure 8 : une vue schématique montrant l'arrivée d'une pluralité de feuilles de pâte à mâcher dans un plateau ;
. la figure 9 : une vue schématique en coupe montrant un empilement de plateaux ;
. la figure 10 : une vue schématique en coupe transversale du descenseur.

En référence à la figure 1, l'installation selon l'invention se compose de façon générale des unités suivantes.

Un poste d'approvisionnement 1 en plateaux de maturation 2 vides constitue une réserve pour un transbordeur-basculeur 3 destiné à alimenter individuellement en plateaux vides un poste de chargement 4 suivi d'un convoyeur d'évacuation 5 vers un poste d'évacuation 6 constituant un stock tampon où ils s'accumulent avant leur transport vers les chambres de maturation.

En examinant plus particulièrement l'installation selon l'invention, la pâte à mâcher sort en nappe d'un laminoir puis passe en continu dans un découpeur (non représentés) pour arriver individualisée en feuilles ou en plaques telles que 7 sur une rampe transporteuse d'amenée 8. Cette rampe d'amenée 8 est inclinée, extrémité de projection vers le bas, pour permettre un meilleur chargement rapide à la volée dans chaque nouveau plateau supérieur présent en position inclinée en attente de chargement.

En effet, le chargement s'effectue à haute cadence par projection des feuilles 7 à plat parallèlement au fond 9 des plateaux 2 sur lequel elles viennent s'empiler comme on peut le voir sur la figure 8.

Les feuilles 7 sont transportées par la rampe transporteuse d'amenée 8 disposée en position inclinée selon un angle d'inclinaison approprié. Arrivées en limite de la rampe, elles sont projetées inclinées sur le fond du plateau où elles butent contre le bord en regard du plateau et se rabattent à plat en raison de l'angle d'inclinaison initial qu'elles prennent et gardent sensiblement au cours de leur trajet dans l'air par l'effet de leur vitesse initiale. Cet angle est identique ou voisin à celui que présente chaque plateau en position de chargement pour permettre un empilement des feuilles dans des conditions optimales.

Il importe donc que les plateaux soient inclinés selon un angle identique ou voisin à celui de la rampe d'amenée.

Par une fonction d'accélération après la découpe, les feuilles sont placées physiquement distantes les unes des autres sur cette rampe d'un intervalle "d" dont la valeur donne le temps mort disponible pour les opérations de substitution d'un plateau chargé par un plateau vide avec évacuation et amenée des autres plateaux.

Ces plateaux de maturation 2 sont de type classique largement répandus dans l'industrie de la production de la pâte à mâcher. Ils sont réalisés généralement en bois. La forme de réalisation classique est représentée sur la figure 8. Ils sont constitués de la façon suivante. Un fond 9 supporte deux traverses de bordure 10 ou 11 à épaulement inférieur 12 ou 13. Les bords latéraux du fond 9 sont libres, c'est-à-dire sans bordure. Les épaulements inférieurs 12 et 13 permettent la superposition à calage des plateaux lors de leur empilement comme on peut le voir sur la figure 9.

Ces plateaux sont placés les uns sur les autres selon un empilement de réserve 14 en attente au poste d'approvisionnement 1 dans un magasin sous la forme d'une tour de stockage 15. L'empilement 14 repose sur le dernier plateau soutenu par des doigts de retenue 16 et 17. Les plateaux sortent individuellement de la tour par le bas puis sont transférés un par un jusqu'au poste de chargement et placés en position inclinée à l'aide du transbordeur-basculeur 3 dans un descenseur 18 dans lequel les plateaux sont chargés en feuilles puis évacués à un rythme rapide.

Le descenseur 18 constitue l'essentiel du poste de chargement 1. Il permet de descendre les plateaux 2 par sauts successifs entre trois niveaux représentés par une position supérieure à l'état vide, une position de remplissage et une position basse d'évacuation.

Il se compose de deux groupes de supports mobiles étagés qui constituent des échelles tournantes 19 et 20 disposées face à face. Chaque groupe comprend des éléments de soutien tels que 21 et 22 opposés deux à deux soutenant les plateaux 2 par leurs bordures longitudinales comme le montre la figure 10 pour leur permettre des déplacements par sauts synchronisés avec les mouvements d'amenée, de remplissage et d'évacuation des plateaux.

Chaque saut doit se dérouler dans un intervalle de temps bref inférieur à la durée de chargement de deux feuilles consécutives sur le plateau. Cette durée est déterminée par la distance "d" entre deux feuilles consécutives et par la vitesse linéaire de fonctionnement de la rampe d'amenée.

Une des originalités de l'invention concerne la possibilité de commander de façon simple par programmation le nombre de feuilles à charger dans chaque plateau. Il suffit de programmer au niveau de la commande des sauts de plateaux la durée entre deux sauts consécutifs, c'est-à-dire par exemple de modifier le seuil du compteur de feuilles.

La distance "d" qui correspond à un intervalle de temps prédéterminé provient d'une accélération des feuilles à la sortie du dispositif de découpe. Celle-ci réglable est établie à une valeur compatible avec le temps mécaniquement nécessaire au saut du plateau.

Cet intervalle doit permettre pendant la durée correspondante d'effectuer les opérations suivantes :
. descente du plateau chargé en position intermédiaire après le signal de remplissage provenant d'un compteur de feuilles ;
. mise en position de chargement par le même mouvement du descenseur du plateau suivant déjà admis dans l'appareil ;
. libération du plateau plein arrivé en position inférieure.

A cet instant on peut engager un nouveau plateau vide dans le descenseur et décharger le plateau plein par la partie inférieure de cet appareil en vue de son évacuation vers la tour de stockage tampon.

Il faut comprendre que le début de la séquence correspond à la dépose du plateau inférieur sur le convoyeur d'évacuation. Le décalage consécutif des plateaux vers le bas laisse l'emplacement supérieur libre à la dépose dans le descenseur au-dessus du plateau précédemment chargé d'un nouveau plateau en position inclinée par le convoyeur-basculeur qui présente un nouveau plateau vide soustrait à la réserve constituée par la tour d'approvisionnement.

Il convient de remarquer que les différents mouvements s'effectuent dans un intervalle de temps très bref, par exemple de l'ordre de 0,3 seconde.

On décrira maintenant plus en détail les moyens d'amenée et d'évacuation des plateaux au poste de chargement 4.

Le transbordeur-basculeur 3 est constitué d'un cadre porteur 23 monté mobile en coulissement ou en roulement le long de deux profils-guides : rails tiges ou autres 24,25 d'un châssis basculant 26 autour d'un axe déporté 27 de manière à arriver en position de mise en place dans le descenseur 18 en présentation inclinée adéquate.

Un coulisseau moteur 28 assure la poussée et la traction de translation nécessaires au déplacement du cadre porteur 23 entre ses deux positions extrêmes depuis la réception d'un plateau vide jusqu'à sa dépose en position inclinée de chargement et inversement en mouvement de retour. Ce coulisseau moteur 28 est par exemple actionné par un vérin à double effet sans tige ou par tout autre mécanisme de va-et-vient adapté.

Le convoyeur d'évacuation 5 est un convoyeur composite qui se compose de deux parties : un convoyeur amont 29 recevant du descenseur 18 le plateau chargé et un convoyeur aval 30 destiné à conduire le plateau chargé jusqu'à la base de l'empilement de pré-stockage du poste d'évacuation 6 d'où il est intégré à la pile en prenant la place du plateau inférieur qui monte d'un intervalle.

Le convoyeur amont 29 est constitué d'un transporteur basculant 31 autour d'un axe 32 à chaînes ou à cordes entre une position inclinée de prise du plateau inférieur chargé et libéré par le descenseur et une position horizontale de convoyage jusqu'à une zone de recouvrement 33 correspondant à la reprise par le convoyeur aval 30. Celui-ci assure le simple transfert entre la position de reprise et celle d'intégration par le bas à l'empilement du poste d'évacuation 5.

Le poste d'évacuation 6 se compose d'un empileur inverse 34, c'est-à-dire à empilement par le bas, pour former une pile d'évacuation 35 constituant une réserve tampon 36.

Pour ce faire, des moyens spécifiques, par exemple des doigts de soutien 37 et 38, soulèvent la pile puis font remonter et intégrer à la pile le plateau amené sous la pile par le convoyeur aval 30 jusqu'à la constitution d'une pile complète.

On examinera maintenant la circulation des plateaux.

Les plateaux vides revenant de la chambre de maturation sont recyclés à l'état empilé dans la tour servant de magasin. L'empilement de la tour est amputé des plateaux un par un par le bas. Ceux-ci sont amenés jusqu'au descenseur et chargés en position inclinée sur le dernier plateau après son chargement complet en feuilles de pâte à mâcher. Après mise en place, le plateau est chargé en feuilles de pâte à mâcher puis descend d'une puis de deux positions dans le descenseur. En position basse, il est pris par le convoyeur amont qui, après inclinaison jusqu'en position horizontale, transporte le plateau chargé jusqu'au convoyeur aval qui l'amène à son tour jusqu'au poste d'évacuation. Là, après empilement, il sera évacué par lots vers la ou les chambres de maturation et par la suite vers les emballeuses.

## Revendications

1. Installation de chargement automatique à haute cadence de plateaux de maturation en pâte à mâcher pour une ligne de production de pâte à mâcher, caractérisée en ce qu'elle se compose d'un poste d'approvisionnement (1) en plateaux (2) de maturation associé à un poste de chargement (4) à plateaux inclinés par l'intermédiaire d'un transbordeur-basculeur (3), en ce que les plateaux inclinés dans le poste de chargement (4) reçoivent à la volée les feuilles de pâte à mâcher sur leur fond (9) à partir d'une rampe d'amenée (8) sur laquelle les feuilles se suivent séparées par un intervalle "d" et en ce que les plateaux de maturation chargés sont évacués individuellement par un convoyeur d'évacuation (5) vers un poste d'évacuation (6).

2. Installation selon la revendication 1, caractérisée en ce que la rampe d'amenée (8) est inclinée.

3. Installation selon la revendication 2, caractérisée en ce que la rampe d'amenée inclinée (8) est un convoyeur à bande.

4. Installation selon l'une quelconque des revendications précédentes, caractérisée en ce que la rampe d'amenée (8) et les plateaux au poste de chargement (4) sont inclinés de la même façon.

5. Installation selon l'une quelconque des revendications précédentes caractérisée en ce que le poste de chargement (4) est un descenseur (18) incliné recevant individuellement les plateaux vides par le haut et évacuant individuellement les plateaux chargés par le bas.

6. Installation selon la revendication précédente caractérisée en ce que le descenseur se compose de deux échelles tournantes (19) et (20) disposées en regard, soutenant les plateaux (2) par leur structure longitudinale et les amenant un à un vers le bas d'où ils sont repris par le convoyeur d'évacuation.

7. Installation selon l'une quelconque des revendications précédentes, caractérisée en ce que le poste d'approvisionnement (1) est un magasin sous la forme d'une tour dans laquelle les plateaux sont empilés, la pile étant retenue par des doigts de soutien (16) et (17) et débitée par déchargement des plateaux un par un par le bas.

8. Installation selon l'une quelconque des revendications précédentes, caractérisée en ce que le poste d'évacuation (6) est un magasin sous la forme d'une tour dans laquelle les plateaux sont empilés, la pile étant grossie par chargement en plateaux un par un par le bas.
